# EUROPÄISCHE PATENTSCHRIFT

(11) **EP 2 902 203 B1**
(45) Veröffentlichungstag und Bekanntmachung des Hinweises auf die Patenterteilung: **03.08.2016**
(21) Anmeldenummer: 14197856.9
(22) Anmeldetag: 15.12.2014
(51) Int. Cl.: B41F 33/00, B41F 33/12, B41F 33/16, B41J 2/005, B41J 2/21

(54) **Verfahren und Vorrichtung zur Steuerung und Regelung eines digitalen Druckprozesses**
Method and device for controlling and regulating a digital printing process
Procédé et dispositif destinés à la commande et au réglage d'un processus d'impression numérique

(30) Priorität: 20.12.2013 DE 102013021736
(43) Veröffentlichungstag der Anmeldung: 05.08.2015
(73) Patentinhaber: manroland web systems GmbH, 86153 Augsburg (DE)
(72) Erfinder: Elchlepp, Andreas, 86551 Aichach (DE)

(56) Entgegenhaltungen:
- EP-A1- 0 824 070
- EP-A2- 2 135 740
- DE-A1-102005 019 533

## Beschreibung

Die Erfindung betrifft ein Verfahren zur Steuerung bzw. Regelung eines Produktionsprozesses bei einer druckformvariablen Produktionseinrichtung, sowie eine Vorrichtung zur Ausführung des Verfahrens, gemäß den unabhängigen Patentansprüchen.

### Stand der Technik

In Druckereien werden Produktionseinrichtungen eingesetzt, die einen Auftrag vollständig ausführen können. Dies umfasst das Drucken des Auftrages ebenso wie die Weiterverarbeitung zu dem fertigen Produkt, z.B. einen aus einem einzigen Blatt bestehenden Werbe-Flyer bis hin zu einem vollständig gebundenen Buch.

Es ist zu beobachten, dass zunehmend Produktionseinrichtungen eingesetzt werden, bei denen als Druckeinrichtung Digitaldruckmaschinen verwendet werden, welche sich im Vergleich zu herkömmlichen Offsetdruckmaschinen insbesondere dafür eignen, eine Vielzahl wechselnder und unterschiedlicher Druckaufträge zu bearbeiten, d.h. grundsätzlich jedes einzelne Druckexemplar unterschiedlich drucken können, da sie bei jedem einzelnen Druckvorgang das Bild neu aufbauen. Diese Produktionseinrichtungen werden als druckformvariable Produktionseinrichtungen oder Digitaldruckmaschinen bezeichnet.

Aus der Praxis ist bereits bekannt, dass eine Digitaldruckmaschine ein Produktionsplanungs- und Produktionssteuerungssystem, also z.B. ein Digitaldruckplanungsmodul und einen Druckmaschinenrechner, umfasst, um das Drucken von Druckaufträgen auf der Digitaldruckmaschine zu planen und zu steuern.

Die DE 10 2005 019 533 A1 offenbart eine Lösung, bei welcher das Druckbild mittels einer Inline-Inspektionseinrichtung erfasst wird, mit dem Zweck, dass fehlerhafte Bildbereiche erfasst, gekennzeichnet und ggf. ausgeschleust werden.

Die DE 197 04 003 A1 offenbart eine Bogendruckmaschine, in der zum Eindrucken von individualisierenden Kennzeichnungen Laser- oder Tintenstrahldrucker an einem Druckzylinder angeordnet sind.

Die DE 203 03 574 U1 offenbart eine Bildinspektionseinrichtung, bei welcher der Bedruckstoff durch eine Bildaufnahme erfasst und die Bildsignale einer nachgeschalteten Bildverarbeitung zugeführt werden.

Die DE 103 00 071 A1 offenbart ein Verfahren zur Kombination von Druckerzeugnissen mit variablen und konstanten Druckbildern und Druckerzeugnissen, wobei die Druckerzeugnisse auf verschiedenen Druckeinrichtungen parallel gedruckt werden.

Weiterhin ist bekannt, dass in einer Druckvorstufe, d. h. in einer dem eigentlichen maschinellen Druckvorgang vorgelagerten Produktionsstufe, erforderliche Informationen - nämlich sogenannte Druckdaten - bereits passend zu den vorgegebenen maschinellen Druckbedingungen und dem vorgegebenen Druckverfahren aufbereitet und die Flächendeckungen und Farben in einem digitalen Datenbestand entsprechend festgelegt werden. Auf Grundlage dieser Daten wird der Druckvorgang dann in einer Druckmaschine, wie beispielsweise einer Inkjetdruckeinrichtung oder einer Laserdruckeinrichtung, durchgeführt und während der Druckproduktion werden diese digitalen Druckdaten nicht mehr verändert. Bei Digitaldruckmaschinen werden diese Daten digital als digitale Druckdaten oder Bebilderungsdaten gespeichert und können während des gesamten Produktionsvorgangs der Produktionseinrichtung zur Verfügung gestellt werden bzw. davon abgerufen werden.

Des Weiteren ist bekannt, dass die Daten des dem Fachmann bekannten sogenannten Ausschießers ebenfalls in dem Produktionsplanungs- und Produktionssteuerungssystem in einem passenden Format für die Weiterverarbeitung hinterlegt bzw. gespeichert werden können.

Weiterhin ist bekannt, dass eine der Digitaldruckmaschine nachgelagerte Weiterverarbeitungseinrichtung, z.B. eine Schneide-, Falz-, Klebe-, Stanz-, Sektionier-, Sammel-, Ausschleuß-, und/oder Hefteinrichtung, angesteuert werden muss. Bislang erfolgt diese Ansteuerung mittels sogenannter "Marken", welche während des Druckvorgangs auf den einzelnen Druckaufträgen, welche auf dem sogenannten Bedruckstoff gedruckt werden, aufgedruckt werden. Hierbei wird gewöhnlich für eine von der Weiterverarbeitungseinrichtung durchzuführende Aktion eine andere "Marke" benötigt.

Dieses Verfahren hat mehrere Nachteile. Einerseits wird durch den benötigten Platz zum Drucken der Marke mehr Papier und Farbe benötigt, da der Teil des Bedruckstoffes, der die Marke(n) enthält, abgeschnitten werden muss, da der Kunde keine Marke auf dem fertigen Produkt haben möchte. Ferner ist der Automatisierungsgrad des Produktionsprozesses eingeschränkt, da die Weiterverarbeitungsmaschine nicht automatisch an den Datenfluss des Produktionsplanungs- und Produktionssteuerungssystems angebunden werden kann. Das heißt unter anderem, dass Steueraktionen wie z.B. Schneiden, Sammeln, Falzen, Leimen, Kleben, Sektionieren, Perforieren, Ausschleusen etc. in der für jeden Auftrag individuellen Reihenfolge nicht ohne weiteres, d.h. ohne vor dem Druckprozess definierte und dann aufgedruckte Marken, ausgeführt werden können, was den Druckprozess verlangsamen kann. Ferner ist eine Qualitätskontrolle mittels der Marken nicht möglich.

Eine Verbesserung des Automatisierungsgrades wird in einer vom gleichen Anmelder eingereichten Patentanmeldung) vorgeschlagen. Allerdings wird hier das Problem des hohen Papier- und Farbverbrauchs nicht gelöst. Auch wird hier eine schnelle unterschiedliche Steueraktion für jeden Auftrag, d.h. eine seitengenaue Steueraktionen, nicht problematisiert oder gelöst.

Deshalb ist eine Aufgabe der vorliegenden Erfindung, die oben genannten Probleme zu lösen. Diese Aufgabe wird durch das Verfahren zur Steuerung bzw. Regelung eines Produktionsprozesses bei einer druckformvariablen Produktionseinrichtung gemäß Patentanspruch 1 sowie die Vorrichtung gemäß Patentanspruch 17 gelöst. Weitere vorteilhafte Ausgestaltungen sind in den abhängigen Patentansprüchen offenbart.

Das erfindungsgemäße Verfahren zur Steuerung bzw. Regelung eines Produktionsprozesses bei einer druckformvariablen Produktionseinrichtung, wobei der Produktionsprozess einen oder mehrere Aufträge umfasst, wobei für jeden dieser Aufträge entsprechende Produktdaten in einer Speichereinrichtung gespeichert sind, umfasst die folgenden Schritte: a) Erfassen mittels einer Erfassungseinrichtung eines Druckbilds von zumindest einem Teil eines Bedruckstoffes, b) Vergleichen des erfassten Druckbilds mit den für jeden Auftrag gespeicherten Produktdaten, um den zugehörigen Auftrag und die zugehörigen Produktdaten zu dem erfassten Druckbild zuzuordnen, c) Vergleichen des erfassten Druckbilds mit den zugeordneten Produktdaten, um basierend auf diesem Vergleich nachfolgende Steueraktionen zu berechnen, und d)Ausführen der Steueraktionen durch die Produktionseinrichtung. Die erfindungsgemäße Vorrichtung ist dazu angepasst, das vorgenannte Verfahren auszuführen.

Der Kern der hier vorliegenden Erfindung ist, einen Produktionsprozess ohne die Verwendung von Marken zur Verfügung zu stellen. Ein Vorteil einer markenlosen Produktion ist, dass eine Einsparung von Papier und Farbe erfolgt, womit die Produktionskosten gesenkt werden können, sowie ein umweltfreundlicheres Verfahren zur Verfügung gestellt wird. Ferner wird mit einem solchen Verfahren durch das Bereitstellen von Produktdaten, wie beispielsweise Bebilderungs-, Ausschieß- und/oder Produktstrukturdaten für jeden Druckauftrag ein höherer Automatisierungsgrad erreicht, womit eine flexiblere Produktionsplanung ermöglicht wird, was zu einem schnelleren Produktionsprozess führt.

Eine druckformvariable Produktionseinrichtung gemäß der vorliegenden Erfindung kann sowohl eine Druckmaschine mit einer oder mehreren integrierten Weiterverarbeitungseinrichtungen umfassen, als auch eine Druckmaschine und ein oder weitere modulare, d.h. nicht integrierte, Komponenten, die als Weiterverarbeitungseinrichtungen dienen. In der Druckmaschine werden eine oder mehrere Papierbahnen oder der Papierbögen gemäß den vorliegenden Aufträgen, welche in einer Speichereinrichtung gespeichert sind, bedruckt und anschließend zu einer Weiterverarbeitungseinrichtung weitergeleitet. Ein Produktionsprozess umfasst dabei mehrere Aufträge. Dabei kann sich jeder Auftrag vom vorhergehenden unterscheiden.

Eine Speichereinrichtung gemäß der vorliegenden Erfindung kann jegliche Einrichtung zum Speichern von Informationen umfassen. Die Speichereinrichtung kann in einer der Produktionseinrichtungen integriert sein oder anderweitig zur Verfügung stehen, beispielsweise über einen Netzwerkanschluss und entsprechende Schnittstellen, und ist aus dem Stand der Technik bekannt. Die Speichereinrichtung kann die gespeicherten Daten über beispielsweise Schnittstellen anderen Produktionsmaschinen zur Verfügung stellen. Das Datenformat kann auch in ein für die entsprechende Produktionsmaschine passendes Format gewandelt werden. Die Speichereinrichtung kann jegliche zur Verfügung gestellten Produktdaten, beispielsweise die Bebilderungs-, Ausschieß- und Produktstrukturdaten, speichern und bei Bedarf jeder der Produktionseinrichtungen zur Verfügung stellen.

Weiterverarbeitungseinrichtungen gemäß der vorliegenden Erfindung sind alle Einrichtungen, die ein Weiterverarbeiten des aus der Druckmaschine kommenden Bedruckstoffes, sei es als Papierbahn oder auch als Bogen oder in jedem anderen möglichen Format, ermöglichen. Dazu zählen unter anderem eine oder mehrere Schneide-, Falz-, Stanz-, Sektionier-, Sammel-, Ausschleuß-, und/oder Hefteinrichtungen oder eine Kombination daraus. Unter Weiterverarbeiten wird jegliche Weiterverarbeitung des aus der Druckmaschine kommenden Bedruckstoffes verstanden, also beispielsweise das Schneiden, Falzen, Sammeln, Leimen, Kleben, Sektionieren, Perforieren, Ausschleusen, Zusammenbringen, Buchblöcke binden und/oder Weiterleiten an die nächste Weiterverarbeitungseinrichtung etc.

Die Erfassungseinrichtung gemäß der vorliegenden Erfindung kann entweder vor bzw. in der Weiterverarbeitungseinrichtung integriert sein oder kann modular zur Verfügung gestellt werden. Die Erfassungseinrichtung erfasst zumindest einen Teil des Druckbilds des Bedruckstoffes, welcher von der Druckmaschine erzeugt und weitergeleitetet wurde.

Zur Erfassung des Druckbildes eines jeden Auftrags können unterschiedliche Verfahren und Vorrichtungen abhängig von der benutzten Erfassungseinrichtung verwendet werden. So können beispielsweise nur ein oder mehrere vordefinierte Teile des Druckbildes eines Auftrags erfasst werden. Ein solcher Teil kann beispielsweise ein vorbestimmter Bereich sein, der für den entsprechenden Druckauftrag charakteristische Merkmale, z.B. Geometriedaten, aufweist. Es können auch mehrere Bereiche gleichzeitig erfasst werden. Die Bereiche können beispielsweise eine einzelne oder mehrere Bahnen oder Spuren sein oder vordefinierte Bereiche des einzelnen Auftrags oder eine Kombination daraus. Die Bereiche können für jeden Auftrag unterschiedlich sein. Die Erfassung kann mittels eines Sensors oder einer anderen geeigneten Erfassungseinrichtung erfolgen. Das Druckbild kann pixelgenau erfasst werden, oder aber in jeder beliebigen Auflösung, je nachdem, welche Erfassungseinrichtung verwendet wird. Die Erfassung kann auch erfolgen, indem ein Histogramm über mehrere vordefinierte Merkmale erzeugt wird, beispielsweise mittels eines Bild- oder Farbhistogramms, welche aus der digitalen Fotographie bekannt sind. Es können auch ein oder mehrere vorbestimmte Merkmale, wie beispielsweise einzelne Farben oder mehrere Farben, darunter auch weiß und schwarz, erfasst werden. Auch kann eine Kombination aus beispielsweise der Farberfassung für einen Bereich und einer pixelgenauen Erfassung für einen weiteren Bereich erfolgen. Dies kann beispielsweise für ein Erfassen von Buchseiten, die sich hauptsächlich in der Seitennummerierung unterschieden, vorteilhaft sein. Die hier beschriebenen Erfassungsmöglichkeiten sind allerdings nicht beschränkt. Vielmehr kann jedes Verfahren zur Erfassung des Druckbildes verwendet werden, solange es den Anforderungen bezüglich der benötigten Informationen, also z.B. Auflösung, genügt. Denkbar sind hier beispielsweise auch aus der Bildverarbeitung bekannte Verfahren wie ein Abfotografieren oder ein zeilenweises Abtasten des Druckbildes.

Nachdem die Erfassungseinrichtung das Druckbild erfasst hat, erfolgt ein Vergleichen des erfassten Druckbildes mit den für jeden Auftrag bekannten und schon für das Drucken gespeicherten Produktdaten, wie beispielsweise den Bebilderungsdaten bzw. digitalen Druckdaten, um dem Druckbild den entsprechenden Auftrag zuzuordnen. Der Vergleich wird durch bekannte Vergleichseinrichtungen durchgeführt und ist abhängig davon, wie das Druckbild erfasst wurde. Es kann beispielsweise ein Bild-Bild-Vergleich erfolgen, bei dem das gesamte Druckbild mit den Bebilderungsdaten verglichen wird. Es kann aber auch das Histogramm mit den Bebilderungsdaten verglichen werden, wenn diese in demselben Format vorliegen oder in dieses gewandelt werden. Auch ist der Vergleich von der Rechnerleistung und den zu vergleichenden Daten abhängig und wird so gewählt, dass eine hohe Effizienz und die benötigte Genauigkeit erreicht werden.

Nachdem der entsprechende Auftrag dem jeweiligen Druckbild zugeordnet wurde, werden die dem Auftrag entsprechenden Produktdaten, insbesondere die Ausschieß- und Produktstrukturdaten, ebenfalls dem Druckbild zugeordnet, so dass daraus die für den Auftrag entsprechenden nachfolgenden Steueraktionen zugeordnet und ausgeführt werden können.

Die Produktdaten werden bevorzugt in derselben Speichereinrichtung gespeichert, sind aber nicht darauf beschränkt. Die Produktdaten können in einem Format bereitgestellt werden, das direkt verwendet werden kann, oder in ein geeignetes Format umgewandelt werden kann.

Die Produktdaten umfassen vorzugsweise Bebilderungs-, Ausschieß- und Produktstrukturdaten, sind aber nicht darauf beschränkt. Vielmehr umfassen die Produktdaten alle Daten, die zur Ausführung des jeweiligen Auftrags durch die Produktionseinrichtung benötigt werden.

Unter Produktstrukturdaten sind die Daten zu verstehen, die im Wesentlichen den logischen und formatbezogenen, d. h. größenbezogenen Aufbau des Produkts, das aus dem entsprechenden Auftrag resultiert, definieren. Unter logischem Aufbau des Produkts ist insbesondere zu verstehen, wie das Produkt beschaffen ist, d.h. welches Format es aufweist, welche Buchstruktur, mit welcher Seitenzahl, mit welchen Sammelvorgängen, welche Falzvarianten als auch welche weiteren Nachverarbeitungsschritte wie Beschnitt, Aufsammeln, mit anderen Sektionen zu Buchblöcken zusammenführen etc, d. h. welche Schritte bei der Verarbeitung, erfolgen müssen, um das gewünschte Produkt zu erhalten etc., also welche Steueraktionen bei der Weiterverarbeitungsmaschine benötigt werden. Ferner können noch Inhalt, Personalisierungen des Produktes, sowie Logistikinformationen und kaufmännische Informationen gemäß dem Auftrag unter diesen Begriff fallen.

Nachfolgende Steueraktionen können jegliche Aktionen sein, die gemäß dem auszuführenden Auftrag durch eine der Weiterverarbeitungseinrichtungen durchzuführen sind. Dies können beispielsweise Schneiden, Sammeln, Perforieren, Falzen, Sektionieren, Leimen, Kleben, Zusammenbringen, Buchblöcke binden, Ausschleusen und/oder Weiterleiten an eine nachfolgende Weiterverarbeitungseinrichtung, etc. sein. Die nachfolgenden Steueraktionen sind von dem jeweiligen Druckauftrag abhängig und werden durch die Produktlogik und die Ausschießdaten bestimmt.

Ferner wird gemäß der vorliegenden Erfindung eine druckformvariable Vorrichtung bereitgestellt, welche das oben beschriebene Verfahren ausführt. Diese Vorrichtung umfasst zumindest die oben für das Verfahren beschriebenen Einrichtungen, wie beispielsweise eine Druckmaschine, eine Erfassungseinrichtung, eine Speichereinrichtung und eine Weiterverarbeitungseinrichtung. Weitere Einrichtungen, welche benötigt werden, um einen Druckprozess bei einer druckformvariablen Produktionseinrichtung durchzuführen, sind dem Fachmann bekannt und werden hier nicht erwähnt.

Nachstehend ist die Erfindung anhand der beigefügten Zeichnung, welche lediglich ein Ausführungsbeispiel darstellt, näher erläutert. Es zeigen:
Figur 1 einen prinzipiellen Aufbau einer Produktionseinrichtung mit einer Druckmaschine mit einer integrierten Weiterverarbeitungseinrichtung.
Figur 2 eine vergrößerte Ansicht der Erfassungseinrichtung und des zu erfassenden Druckbildes.
Figur 3 mögliche zu erfassende Bereiche einer bedruckten Papierbahn.

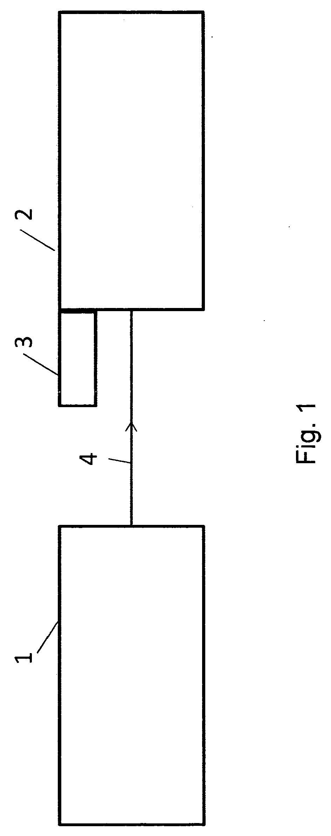

Dargestellt und beschrieben ist mit Bezug zu Figur 1 eine Produktionseinrichtung mit einer Druckmaschine 1 mit einer integrierten Weiterverarbeitungseinrichtung 2. Ferner zeigt Figur 1 eine Erfassungseinrichtung 3, die ein Druckbild des aus der Druckmaschine kommenden Bedruckstoffes 4, beispielsweise von bedruckten Papierbahn(en) oder der Papierbögen, erfasst. Der zur Weiterverarbeitungseinrichtung 2 geleitete Bedruckstoff 4 wird in der Druckmaschine 1 gemäß den vorhandenen Aufträgen und zu dem jeweiligen Auftrag bereitgestellten Bebilderungsdaten, also den digitalen Druckdaten, bedruckt. Die Bebilderungsdaten sind für jeden Auftrag bekannt und in einer (nicht gezeigten) Speichereinrichtung gespeichert. Der Bedruckstoff 4 wird über eine Erfassungseinrichtung 3 zur Weiterverarbeitungseinrichtung 2 geleitet und dort entsprechend der für den jeweiligen Auftrag ermittelten Steueraktionen weiterverarbeitet.

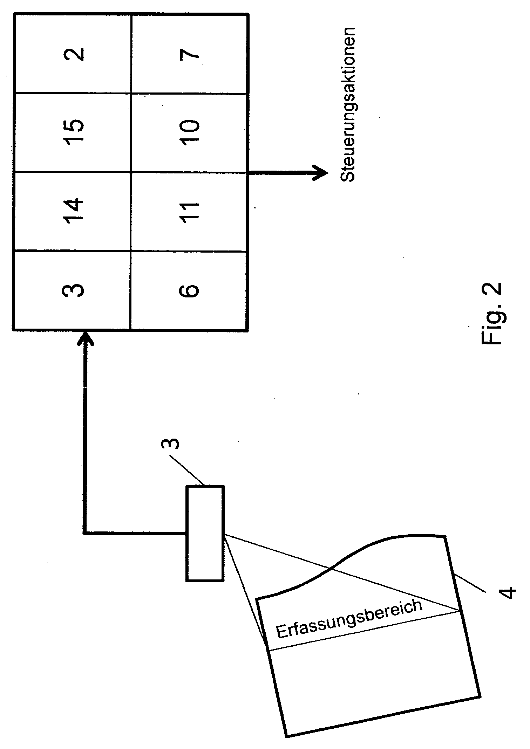

Figur 2 ist eine vergrößerte Ansicht der Erfassungseinrichtung 3 und des zu erfassenden Druckbildes 4. Die Erfassungseinrichtung 3 erfasst zumindest einen Teil des Druckbilds des Bedruckstoffs 4, bevor dieser zu der Weiterverarbeitungseinrichtung 2 gelangt. Das erfasste Druckbild wird mit den Bebilderungsdaten, die zu jedem Auftrag gespeichert sind, verglichen. Durch diesen Vergleich kann dem Druckbild der zugehörige Auftrag und damit die passenden Ausschieß- und Produktstrukturdaten zugeordnet werden. Durch die Zuordnung zu dem passenden Auftrag können somit die nachfolgenden Steueraktionen für den jeweiligen Auftrag bestimmt werden und in der Weiterverarbeitungseinrichtung 2 durchgeführt werden.

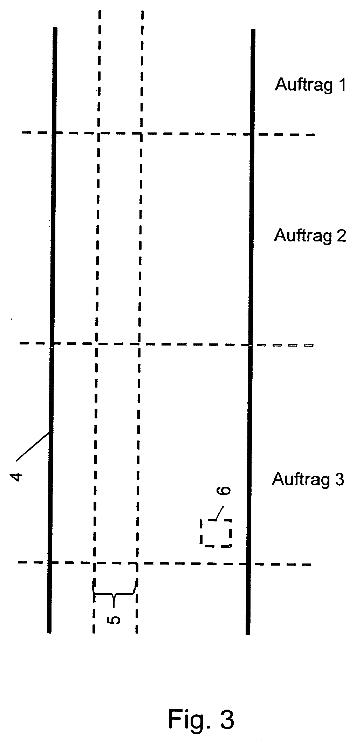

Figur 3 zeigt eine beispielhafte Ansicht möglicher zu erfassender Bereiche. Es können einzelne Bahnen 5 oder vorbestimmte Bereiche 6, oder eine Kombination daraus, beispielsweise Bereiche, in denen Seitenzahlen oder andere charakteristische Merkmale vorhanden sind, erfasst werden. Diese Erfassung erfolgt vorzugsweise hochauflösend, möglichst pixelgenau, da hier ein Erfassen des Bildinhaltes gewünscht ist, um eine eindeutige Zuordnung zu erzielen. In dem hier gezeigten Beispiel erfolgt die Erfassung nur auf einer Seite des Bedruckstoffs. Dies ist aber nicht beschränkt. Vielmehr kann eine Erfassung auch auf einer oder mehreren Seiten erfolgen, z.B. bei Papierbahnen oder -bögen von oben und unten.

Die Erfindung überwindet die anfangs beschriebenen Nachteile durch das Bereitstellen des oben beschriebenen Verfahrens sowie einer Vorrichtung zum markenlosen Erfassen eines Druckbildes. Weitere Vorteile sind die Möglichkeit, durch die Verwendung einer Erfassungseinrichtung eine Qualitätskontrolle des resultierenden Produkts bereits in der Produktionseinrichtung durchzuführen, sowie beispielsweise eine Vollständigkeitsprüfung durchzuführen oder ein Erkennen von Ausschüssen zu erreichen.

### Bezugszeichenliste

- 1: Druckmaschine
- 2: Weiterverarbeitungseinrichtung
- 3: Erfassungseinrichtung
- 4: Papierbahnen bzw. Papierbögen
- 5: einzelne Bahnen
- 6: vorbestimmte Bereiche

## Patentansprüche

1. Verfahren zur Steuerung bzw. Regelung eines Produktionsprozesses bei einer druckformvariablen Produktionseinrichtung (1, 2, 3), wobei der Produktionsprozess einen oder mehrere Aufträge umfasst, wobei für jeden dieser Aufträge entsprechende Produktdaten in einer Speichereinrichtung gespeichert sind, und wobei das Verfahren die folgenden Schritte umfasst:
a. Erfassen mittels einer Erfassungseinrichtung (3) eines Druckbilds von zumindest einem Teil eines Bedruckstoffes (4),
b. Vergleichen des erfassten Druckbilds mit den für jeden Auftrag gespeicherten Produktdaten, um den zugehörigen Auftrag und die zugehörigen Produktdaten zu dem erfassten Druckbild zuzuordnen,
c. Vergleichen des erfassten Druckbilds mit den zugeordneten Produktdaten, um basierend auf diesem Vergleich nachfolgende Steueraktionen zu berechnen,
d. Ausführen der Steueraktionen durch die Produktionseinrichtung (1, 2, 3).

2. Verfahren nach Anspruch 1, wobei Produktdaten Bebilderungsdaten, Ausschießschemata und/oder Produktstrukturdaten umfassen.

3. Verfahren nach Anspruch 2, wobei die Produktstrukturdaten Informationen über den logischen Aufbau, den Inhalt, Personalisierungen des Produktes, sowie Logistikinformationen und kaufmännische Informationen gemäß jedem Auftrag umfassen.

4. Verfahren nach Anspruch 2 oder 3, wobei in Schritt b das erfasste Druckbild mit den für jeden Auftrag gespeicherten Bebilderungsdaten verglichen wird, um den zugehörigen Auftrag zuzuordnen und das zugehörige Ausschießschema und die zugehörigen Produktstrukturdaten zu identifizieren und dem Druckbild zuzuordnen.

5. Verfahren nach Anspruch 4, wobei in Schritt c das erfasste Druckbild mit den Bebilderungsdaten und dem identifizierten Ausschießschema und den Produktstrukturdaten verglichen wird.

6. Verfahren nach einem der vorhergehenden Ansprüche, wobei zumindest eine vorbestimmte Spur des Druckbilds des Bedruckstoffes (4) erfasst wird.

7. Verfahren nach einem der vorhergehenden Ansprüche, wobei die Erfassung auf zumindest einer Seite des Bedruckstoffes (4) erfolgt.

8. Verfahren nach einem der vorhergehenden Ansprüche, wobei das Druckbild pixelgenau erfasst wird.

9. Verfahren nach einem der vorhergehenden Ansprüche, wobei das Druckbild so erfasst wird, dass wesentliche Geometriemerkmale erfasst werden.

10. Verfahren nach einem der vorhergehenden Ansprüche, wobei das Druckbild so erfasst wird, dass ein Histogramm über ein oder mehrere vorbestimmte Merkmale erzeugt wird.

11. Verfahren nach Anspruch 10, wobei ein oder mehrere vorbestimmte Merkmale die Farben weiß, schwarz, blau, gelb, rot und/oder grün umfassen.

12. Verfahren nach Anspruch 10 oder 11, wobei zusätzlich eine pixelgenaue Erfassung eines weiteren Merkmals des Druckbildes erfolgt.

13. Verfahren nach einem der vorhergehenden Ansprüche, wobei Steueraktionen sämtliche nachfolgende Verarbeitungsaktionen der Produktionseinrichtung umfassen, insbesondere ein Schneiden, Sammeln, Perforieren, Falzen, Sektionieren, Ausschleusen, Leimen, Stanzen, Buchblöcke bilden und/oder Weiterleiten an eine nachfolgende Weiterverarbeitungseinrichtung.

14. Druckformvariable Produktionseinrichtung, welche das Verfahren gemäß einem der vorhergehenden Ansprüche ausführt.

## Claims

1. A method for controlling or regulating, respectively, a production process in the case of a printing form-variable production device (1, 2, 3), wherein the production process comprises one or a plurality of jobs, wherein corresponding product data are stored in a storage device for each of these jobs, and wherein the method comprises the following steps:
a. detecting a print image of at least a part of a printing material (4) by means of a detecting device (3),
b. comparing the detected print image to the product data stored for every job, so as to assign the corresponding job and the corresponding product data to the detected print image,
c. comparing the detected print image to the assigned product data, so as to calculate subsequent control actions based on this comparison,
d. carrying out the control actions by means of the production device (1, 2, 3).

2. The method according to claim 1, wherein product data comprise imaging data, ejection schemes and/or product structure data.

3. The method according to claim 2, wherein the product structure data comprise information relating to the logical design, the content, personalization of the product, as well as logistics information and commercial information according to each job.

4. The method according to claim 2 or 3, wherein, in step b, the detected print image is compared to the imaging data stored for each job, so as to assign the corresponding job and so as to identify the corresponding ejection scheme and the corresponding product structure data and to assign them to the print image.

5. The method according to claim 4, wherein, in step c), the detected print image is compared to the imaging data and to the identified ejection scheme and to the product structure data.

6. The method according to one of the preceding claims, wherein at least one predetermined track of the print image of the printing material (4) is detected.

7. The method according to one of the preceding claims, wherein the detection occurs on at least one side of the printing material (4).

8. The method according to one of the preceding claims, wherein the print image is detected pixel by pixel.

9. The method according to one of the preceding claims, wherein the print image is detected such that significant geometry features are detected.

10. The method according to one of the preceding claims, wherein the print image is detected such that a histogram is created via one or a plurality of predetermined features.

11. The method according to claim 10, wherein one or a plurality of predetermined features comprise the colors white, black, blue, yellow, red and/or green.

12. The method according to claim 10 or 11, wherein a pixel by pixel detection of a further feature of the print image occurs additionally.

13. The method according to one of the preceding claims, wherein control actions comprise all of the subsequent processing actions of the production device, in particular a cutting, collecting, perforating, folding, sectioning, ejecting, gluing, punching, forming of inner books and/or transferring to a downstream further processing device.

14. A printing form-variable production device, which carries out the method according to one of the preceding claims.

## Revendications

1. Procédé de commande ou de réglage d'un processus de production dans un dispositif de production à cliché d'impression variable (1, 2, 3), dans lequel le processus de production comprend une ou plusieurs commandes, des données de production correspondantes étant enregistrées dans un dispositif de mémoire pour chacune de ces commandes et le procédé comprenant les étapes suivantes :
a. détection au moyen d'un dispositif de détection (3) d'une image imprimée d'au moins une partie d'un support d'impression (4),
b. comparaison de l'image imprimée détectée avec des données de produit enregistrées pour chaque commande pour associer la commande concernée et les données de produit concernées avec l'image imprimée détectée,
c. comparaison de l'image imprimée détectée avec les données de produit associées afin de calculer les actions de commande suivantes à partir de cette comparaison,
d. exécution des actions de commande par le dispositif de production (1, 2, 3).

2. Procédé selon la revendication 1, dans lequel les données de produit comprennent des données d'illustration, des données de schéma de mise au rebut et/ou des données de structure de produits.

3. Procédé selon la revendication 2, dans lequel les données de structure de produits comprennent des informations sur la structure logique, le contenu, la personnalisation du produit, de même que des informations de logistique et des informations commerciales selon chaque commande.

4. Procédé selon la revendication 2 ou 3, dans lequel, dans l'étape b, l'image imprimée détectée est comparée avec des données d'illustration enregistrées pour chaque commande pour associer la commande concernée et identifier le schéma de mise au rebut concerné et les données de structure de produits concernées et les associer à l'image imprimée.

5. Procédé selon la revendication 4, dans lequel, dans l'étape c, l'image imprimée détectée est comparée avec les données d'illustration et le schéma de mise au rebut identifié et les données de structure de produits.

6. Procédé selon une des revendications précédentes, dans lequel au moins une piste prédéfinie de l'image imprimée du support d'impression (4) est détectée.

7. Procédé selon une des revendications précédentes, dans lequel la détection a lieu sur au moins une face du support d'impression (4).

8. Procédé selon une des revendications précédentes, dans lequel l'image imprimée est détectée au pixel près.

9. Procédé selon une des revendications précédentes, dans lequel l'image imprimée est détectée de manière à détecter des caractéristiques géométriques essentielles.

10. Procédé selon une des revendications précédentes, dans lequel l'image imprimée est détectée de manière à générer un histogramme sur une ou plusieurs caractéristiques prédéfinies.

11. Procédé selon la revendication 10, dans lequel une ou plusieurs caractéristiques prédéfinies comprennent les couleurs blanc, noir, bleu, jaune, rouge et/ou vert.

12. Procédé selon la revendication 10 ou 11, dans lequel il y a en outre une détection au pixel près d'une autre caractéristique de l'image imprimée.

13. Procédé selon une des revendications précédentes, dans lequel les actions de commande comprennent toutes les actions de traitement suivantes du dispositif de production, en particulier une coupe, collecte, perforation, un pliage, sectionnement, une éjection, un encollage, un poinçonnage, la constitution de blocs de livres et/ou la transmission à un dispositif de transformation suivant.

14. Dispositif de production à cliché d'impression variable qui exécute le procédé selon une des revendications précédentes.
